# EUROPEAN PATENT APPLICATION

(11) **EP 0 926 868 A1**
(43) Date of publication of application: **30.06.1999**
(21) Application number: 97204101.6
(22) Date of filing: 24.12.1997
(51) Int. Cl.: H04M 3/50, H04Q 3/00

(54) **Adaptive call distribution in a telecommunications system**

(71) Applicant: TELEFONAKTIEBOLAGET L M ERICSSON (publ), 126 25 Stockholm (SE)
(72) Inventor: Huitema, Henk Lambertus, 5104 EN Dongen (NL); Melisse, Alfo, 5122 BJ Rijen (NL)
(74) Representative: Dohmen, Johannes Maria Gerardus

(57) **Abstract**

Adaptive call distribution in a telecommunications system comprising configurations of Service Switching Point (SSP) (15; 16) and Service Control Point (SCP) (17; 18) equipment. For back-up purposes the SCP equipment (17; 18) are configured to provide call services to customers (2, 3; 4) allocated to a particular SCP (17; 18). If two or more of the SCP equipment (17; 18) provide call services to a customer (2, 3; 4), the call distribution capacity of this SCP equipment (17; 18) in relation to such customer (2, 3; 4) is adaptively adjusted in accordance with the call handling capacity of the customer (2, 3; 4).

## Description

### Field of the Invention

The present invention relates to call distribution in a telecommunications system, in particular a telecommunications system comprising configurations of Service Switching Point (SSP) and Service Control Point (SCP) equipment.

### Background of the Invention

Present telecommunication systems, such as the Public Switched Telephone Network (PSTN) and Integrated Service Digital Network (ISDN) comprise flexible routing mechanisms, to provide call services to a customer even if part of the telecommunications system is temporarily not available due to system errors or maintenance, for example. Information as to the telecommunication services available to a subscriber or customer are stored in the SCP equipment. In general, customers are allocated to and serviced by a particular SCP of the telecommunications system, often the SCP are associated with the SSP through which calls to the customer are exchanged.

Customers like call centers or customers providing travel information for the public transport network, for example, have a genuine desire to maintain optimum accessibility despite system failures or system maintenance, for example. In practice, such customers are availed of a particular call handling capacity, which can be expressed in the number of subscriber fines available.

For back-up purposes, other SCP equipment of the telecommunications system are arranged to provide service to a customer in case of system failures, for example. That is, SCP equipment other than the SCP to which a customer is allocated, may deliver calls to the customer in accordance with the services available.

Thus, in the case of a system failure such that for part of the telecommunications system calls can not be serviced by the SCP to which the customer is allocated, for example, other SCP equipment will provide call services to the customer in a back-up mode. Accordingly, two or more SCP simultaneously may deliver calls to the customer.

It has been observed that in such a case the performance of the system decreases due to the fact that the SCP to which the customer is allocated, in accordance with his call status, may assume that there are a number of lines free while these lines are already occupied by calls serviced through other SCP equipment.

Accordingly, the SCP to which the customer is allocated may not respond in accordance with the actual traffic status of the customer. For example, informing a caller that he or she will be connected while actually no lines are available. It will be appreciated that neither the caller nor the customer will appreciate such malfunctioning. Eventually, the performance of the customer and the network operator are at stake.

### Summary of the Invention

It is an object of the present invention to provide a method of adaptive call distribution in a telecommunications system, such to maintain a required degree of service to customers if serviced by two or more SCP.

It is a further object of the present invention to implement such a method in present SSP and SCP equipment, not requiring additional signalling features.

These and other objects and advantages are achieved by the present invention providing a method of adaptive call distribution in a telecommunications system wherein if two or more of the SCP equipment provide call services to a customer, the call distribution capacity of the SCP equipment in relation to such customer is adaptively adjusted in accordance with the call handling capacity of the customer.

In the present invention, with respect to a particular customer, the SCP equipment delivering calls to a customer is adaptively adjusted to distribute calls taking into account the call handling capacity of the customer.

That is, the call distribution capacity of an SCP, such as the SCP to which the customer is allocated, is adjusted for the number of calls forwarded to the customer by other SCP equipment. Accordingly, SCP equipment providing call services to a customer are able to provide services adapted to the actual call handling capacity of the customer relative to an SCP. Thereby avoiding unjustified services to callers.

In order to avoid extensive exchange of signalling information, in particular in the case of subscribers receiving a plurality of calls, in a further embodiment of the method according to the invention the call distribution capacity of the SCP equipment other than the SCP to which the customer is allocated is set at a fixed level. The call distribution capacity of the SCP to which the subscriber is allocated is set to the call handling capacity of the subscriber reduced by the accumulated call distribution capacity of the other SCP equipment delivering calls to the subscriber.

Although this further embodiment of the method according to the invention lacks dynamic adjustment of the call distribution capacity for the actual call handling capacity of the customer, due to the fact that the risk of system failures resulting in more than two SCP providing services to a customer is very low, in practice this embodiment will perform sufficient. A minimum call distribution capacity can be maintained for the SCP to which the customer is allocated.

In a preferred embodiment of the method according to the invention, the call distribution capacity of the SCP equipment is adapted by transmitting a busy signal to the SCP in accordance with the adjusted call distribution capacity.

Transmission of busy signals is a feature implemented in existing signalling systems. By using this feature for the purpose of the present invention, additional signalling features are avoided. This is an important advantage, because the addition of features to standardized signalling systems requires approval of standardization bodies, which is a process that can take a considerable amount of time and effort.

In a further embodiment of the method according to the invention, the busy signal is transmitted to an SCP by its associated SSP.

Accordingly, the method of the invention can be completely implemented in the SSP equipment using signalling features already available.

The invention addresses also a telecommunications system comprising configurations of Service Switching Point (SSP) and Service Control Point (SCP) equipment, wherein for back-up purposes the SCP equipment are configured to provide call service to customers allocated to a particular SCP, and wherein the SCP equipment are provided with call distribution means, the call distribution means being operative for adapting the call distribution capacity of the SCP equipment in relation to a customer.

In a further embodiment, the call distribution means of the SCP equipment other than the SCP to which the customer is allocated are set at a fixed level. That is, such SCP equipment is not allowed to distribute calls to a customer above the level set. It will be appreciated that different SCP can be set at different levels, for example depending on the number of expected calls in the case of a failure or other temporarily unavailability.

The invention further provides for restoration of the previous situation, that is wherein a single SCP provides services to a customer.

The above-mentioned and other features and advantages of the invention are illustrated in the following description with reference to the enclosed drawings.

### Brief Description of the Drawings

Fig. 1 shows a simplified block diagram of a telecommunications system, incorporating the method according to the present invention.
Fig. 2 shows a simplified block diagram of an SSP arranged for use in a system according to the present invention.

### Detailled Description of the Embodiments

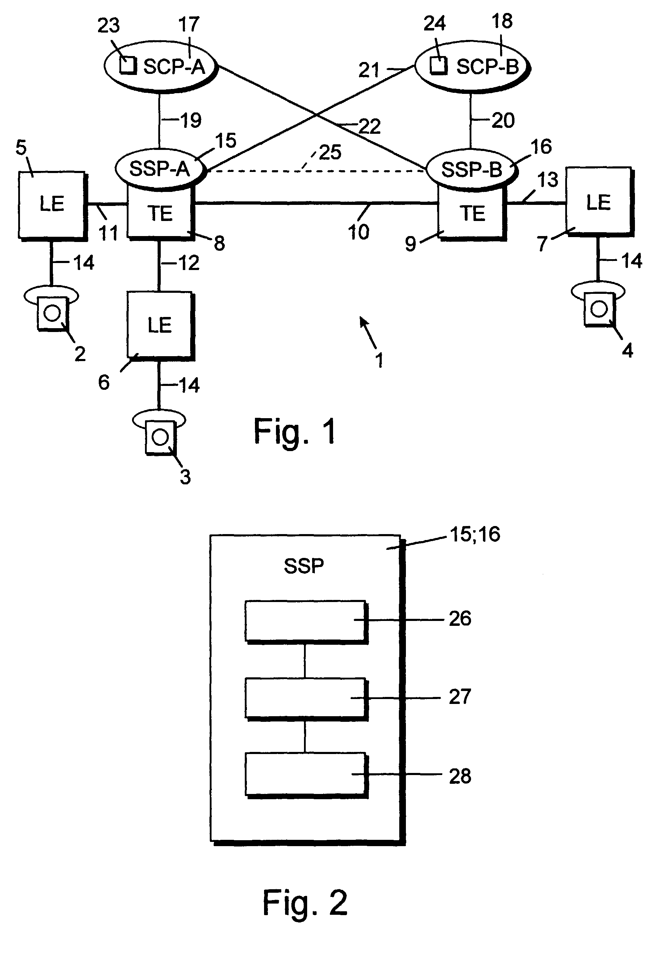

Fig. 1 shows a typical Intelligent Network (IN) telecommunications system 1, comprising configurations of Service Switching Point (SSP) and Service Control Point (SCP) equipment.

For clarification purposes, the telecommunications system is shown in a limited configuration. Those skilled in the art will appreciate that in practice telecommunications systems may comprise a plurality of SSP and SCP equipment. For the purpose of the present invention, SCPs may be arranged in so-called mated pair configurations wherein SCPs act as each others back-up. However, this is not a prerequisite.

The IN telecommunication system 1 is illustrative for a typical Public Switched Telephone Network (PSTN). Subscribers or customers 2, 3, 4 connect through a Local Exchange (LE) 5, 6, 7 to at least one Trunk or Transmit Exchange (TE) 8, 9, respectively. The TE 8, 9 connect by a trunk line 10. The LE 5, 6 and TE 8 connect by trunk lines 11, 12 and the LE 7 and TE 9 connect by a trunk line 13. The subscribers 2, 3, 4 connect by subscriber or drop lines 14 to LE 5, 6, 7, respectively.

In the embodiment shown, the TE 8, 9 are of the type comprising SSP equipment 15, 16, controlling the associated TE in order to establish the required transmission links for exchanging calls by the subscribers 2, 3, 4. For the purpose of the present invention, SSP 15 is identified as SSP-A and SSP 16 is identified as SSP-B.

To each of the SSP 15, 16 an SCP is configured, i.e. SCP 17, 18, respectively. The SCP are operable for controlling telecommunication and network services available to the subscribers 2, 3, 4. In general, subscribers 2, 3 are allocated to SCP 17 whereas subscriber 4 is allocated to SCP 18. For the purpose of explaining the present invention, SCP 17 is identified as SCP-A and SCP 18 is identified as SCP-B.

The SSP 15, 16 and the SCP 17, 18 connect through signalling links 19, 20, 21, 22 as indicated.

The method according to the invention will now be explained with reference to fig. 1 and under the assumption that the customer or subscriber 2 operates a call centre, a public transport information service, or the like. That is, customer 2 receives a plurality of calls. Customer 2 is serviced by SCP-A 17.

Assume that customer 2 has availed himself of six incoming lines, which reflects the call handling capacity of this customer. SCP-A 17 delivers calls to customer 2 in accordance with customer service profile information 23 stored in storage means of SCP-A 17, and in accordance with the actual call handling capacity of the customer, i.e. the number of free or occupied lines. If all the lines are occupied, SCP-A 17 will issue appropriate actions in order to block access of calls or to park such calls in a waiting queue, for example. Other actions are feasible, such to provide optimum service to callers and the particular customer.

Calls routed through SSP-A 15, for example originating from subscriber 3, are serviced by SCP-A 17 and delivered to customer 2 in accordance with his service profile and call handling capacity information 23. Calls routed via SSP-B 16 to be delivered to customer 2 via trunk line 10 and TE 8 are also processed by SCP-A 17. Information between SSP-B 16 and SCP-A 17 is exchanged through signalling link 22.

For back-up purposes, SCP-B 18 stores service profile and call handling capacity information 24 of customer 2, which may be the same or a derivative of the service profile and call handling capacity information 23 stored in SCP-A 17 to which customer 2 is allocated. Further, SCP-B 18 knows which number of lines for customer 2 it may address. SCP-A 17 and SCP-B 18 may be arranged in a mated pair configuration, i.e. they form each others back-up.

Now assume that signalling link 22 between SSP-B 16 and SCP-A 17 is not available, due to malfunctioning, system maintenance or other reasons. Accordingly, calls routed through SSP-B 16 can no longer be processed by SCP-A 17 but instead will be serviced by SCP-B 18 in accordance with the customer service profile information 24. However, calls directly routed through SSP-A 15 are still processed by SCP-A 17. Accordingly, in this case, SCP-A 17 and SCP-B 18 both provide call services to customer 2.

Without the present invention, neither SCP-A 17 nor SCP-B 18 are aware of the actual call handling capacity of customer 2. If SCP-A 17 services two lines of customer 2, it may validly assume that there are four remaining lines. The same can be true for SCP-B 18. While servicing two lines, for example, it may assume that there are four free lines of customer 2. Both SCP-A 17 and SCP-B 18 will take appropriate congestion or busy measures only after four additional calls to customer 2. Accordingly, an SCP may distribute calls to customer 2 leading to severe congestion problems at SSP-A 15, for example. Eventually, such problems may lead to a degradation of the service provided to callers, with the risk of a non-sophisticated perception of callers towards customer 2 and/or the system operator.

With the method according to the present invention, the call distribution capacity of an SCP is adaptively adjusted based on the call handling capacity of the particular customer.

Thus, if two lines of the available six lines of customer 2 are serviced by SCP-B 18, for example, the call distribution capacity of SCP-A 17 is adjusted to four, i.e. the remaining available lines of customer 2. The call distribution capacity of SCP-B 18 is adaptively adjusted taking into account the number of lines already serviced by SCP-A 17.

Information with respect to the number of occupied lines of customer 2 may be available at SSP-A 15. Accordingly, SSP-A 15 can be provided with means for transmitting the actual call handling capacity of the customer 2 if two or more SCPs are delivering calls to customer 2. This information may be transmitted through the signalling links, i.e. signalling link 19 and signalling link 21 from SSP-A 15 to SCP-A 17 and SCP-B 18, for example.

However, if such information is not available, or in addition to this information, by using the busy event signalling feature, or in short the busy signal or busy message, SSP-A 15 is able to inform SCP-A 17 of the actual call handling by another SCP (i.e. using the lines of customer 2). As long as SCP-A 17 receives busy messages, the number of lines addressed by SCP-A 17 may be reduced with one per busy message or busy signal received.

Thus, the method according to the invention can be implemented using existing signalling features by appropriate means in the SSP-equipment, such as schematically indicated in fig. 2.

Fig. 2 shows a simplified block diagram of an SSP 15; 16 for use in the telecommunication system 1 of the invention.

In addition to the known functionality of an SSP for routing calls to and from subscribers, generally designated by block 26, and signalling means 27, additional means 28 are implemented to transmit information with regard to the call handling capacity of a subscriber for the purpose of the present invention. Those skilled in the art are able to implement such means 28 without any inventive skills. In practice, the means 28 may be implemented by appropriate software and/or hardware measures in an SSP.

Although in the above the actual call handling status of a subscriber is exchanged through the signalling links between SSP and SCP equipment, for the purpose of the present invention, in particular in case of associated SSP and SCP configurations, this status information may be exchanged through the linked SSP. In fig. 1 indicated with the broken line 25 between SSP-A 15 and SSP-B 16.

Instead of dynamically adjusting the call distribution capacity with regard to the service profile and call handling capacity information 23, 24 in the SCP-A 17 and SCP-B 18, in accordance with the present invention, the call distribution capacity of an SCP additionally delivering calls to a subscriber in a back-up mode can be set at a fixed level. In the above example, in the case of failure of the link 22, the call distribution capacity of SCP-B 18 with regard to customer 2 may be set to two lines, thus leaving four lines available for calls serviced by SCP-A 17. By transmitting, from SSP-A 15 a busy signal to SCP-A 17 in the case of calls delivered to customer 2 by SCP-B 18, SCP-A 17 will assume four lines available for customer 2, and both SCP-A 17 and SCP-B 18 will act in accordance with the call distribution capacity assigned.

Thus, calls to customer 2 will be treated in a proper manner in the case of congestion or busy lines in either of the SCP equipment delivering calls to the customer 2.

Those skilled in the art will appreciate that the call distribution capacity available to an SCP, other than the SCP to which the customer is allocated, can be set at a fixed level in advance or dependent on the actual call handling of the customer. Fixed levels will require less signalling traffic, i.e. one busy signal suffices.

The original service situation may be restored if the signalling link 22 between SSP-B 16 and SCP-A 17 is up again. If the link is active, SSP-B 16 starts sending service requests to SCP-A 17 again en stops sending service requests to SCP-B 18. As soon as SSP-B 18 sends service requests to SCP-A 17 again, via signalling link 21, for example, SCP-A 17 can conclude that the previous situation has been restored and starts using the original number of lines available for the customer 2.

The invention is, of course, not limited to the embodiment of a PSTN telecommunication system 1 shown and described above. Without departing from the spirit and the scope of the invention as defined in the attached claims, several modifications and additions can be made which, however, are all regarded to be covered by the claims.

## Claims

1. A method of adaptive call distribution in a telecommunications system comprising configurations of Service Switching Point (SSP) and Service Control Point (SCP) equipment, wherein for back-up purposes said SCP equipment are configured to provide call services to customers allocated to a particular SCP, characterized in that if two or more of said SCP equipment provide call services to a customer, the call distribution capacity of said SCP equipment in relation to said customer is adaptively adjusted in accordance with the call handling capacity of said customer.

2. A method according to claim 1, wherein said call distribution capacity of said SCP equipment other than said SCP to which said customer is allocated is set at a fixed level, and wherein said call distribution capacity of said SCP to which said subscriber is allocated is set to the call handling capacity of said subscriber reduced by the accumulated call distribution capacity of said SCP equipment delivering calls to said subscriber.

3. A method according to claim 1 or 2, wherein said call distribution capacity of said SCP equipment is adapted by transmitting a busy signal to said SCP in accordance with said adjusted call distribution capacity.

4. A method according to claim 3, wherein said busy signal is transmitted to said SCP by its associated SSP.

5. A method according to claim 1, 2, 3, or 4, wherein said SSP and SCP equipment are arranged for resuming service to a customer allocated to a particular SCP by said SCP itself.

6. In a telecommunications system, comprising configurations of Service Switching Point (SSP) and Service Control Point (SCP) equipment, wherein for back-up purposes said SCP equipment are configured to provide call service to customers allocated to a particular SCP, characterized in that said SCP equipment are provided with call distribution means, said call distribution means being operative for adapting the call distribution capacity of said SCP equipment in relation to a customer.

7. In a telecommunications system according to claim 6, wherein said call distribution means of said SCP equipment other than said SCP to which said customer is allocated are set at a fixed level.

8. In a telecommunications system according to claim 6 or 7, wherein said SCP equipment comprise means for transmitting call distribution information to said SSP of said SCP to which said customer is allocated.

9. In a telecommunications system according to claim 8, wherein an SSP comprises means for transmitting a busy signal to its SCP dependent on said call distribution capacity available by said SCP.
